# EUROPÄISCHE PATENTSCHRIFT

(11) **EP 1 529 102 B1**
(45) Veröffentlichungstag und Bekanntmachung des Hinweises auf die Patenterteilung: **20.12.2006**
(21) Anmeldenummer: 03783827.3
(22) Anmeldetag: 12.08.2003
(51) Int. Cl.: C12C 5/02, C12C 12/00

(54) **BIERHALTIGES GETRÄNK**
DRINK CONTAINING BEER
BOISSON CONTENANT DE LA BIERE

(30) Priorität: 13.08.2002 AT 54202 U
(43) Veröffentlichungstag der Anmeldung: 11.05.2005
(73) Patentinhaber: Scheler, Günther, 1170 Wien (AT)
(72) Erfinder: Scheler, Günther, 1170 Wien (AT)
(74) Vertreter: Itze, Peter
(86) Internationale Anmeldenummer: PCT/AT2003/000235
(87) Internationale Veröffentlichungsnummer: WO 2004/015053

(56) Entgegenhaltungen:
- TIM ROBINSON: "Pumpkin Beer" -, [Online] 20. Oktober 1996 (1996-10-20), XP002259604 Gefunden im Internet: <URL:http://brewery.org/brewery/cm3/recs/0 7_72.htmlhttp://81.223.119.122/kgbier/nl20 0205.htm> [gefunden am 2003-10-28]
- "Steirerman-Bier mit Kürbisextrakt" KAMPAGNE FÜR GUTES BIER / NEWSLETTER, [Online] 3. September 2002 (2002-09-03), XP002259605 Gefunden im Internet: <URL:http://81.223.119.122/kgbier/nl200205 .htmhttp://81.223.119.122/kgbier/nl200205. htm> [gefunden am 2003-10-29]

## Beschreibung

Die Erfindung betrifft ein bierhaltiges Getränk.

Bierhaltige Getränke sind schon in einer Vielzahl als Mischgetränke bekannt, wobei das bekannteste Mischgetränk wohl der "Radler", also eine Mischung von Bier und Limonade, ist. Es sind allerdings auch schon gewürzte Biere wie Chillibier und dergleichen bekannt, bei welchen Bier mit speziellen Geschmacksstoffen versetzt werden.

Weiters sind auch noch den jeweiligen Anlässen entsprechende Biere bekannt, bei welchen herkömmliche Bierrezepte entsprechend abgewandelt werden. XP 002 259 604 beschreibt den Zusatz von Kürbisöl zu Bier.

Der Erfindung liegt der Aufgabe zugrunde ein bierhaltiges Getränk zu schaffen, welches auch physiologische Wirkung besitzt, die über die von herkömmlichem Bier hinausgeht, wobei der vom Verbraucher erwartete Biergeschmack weitestgehend erhalten werden soll.

Diese Erfindung wird erfindungsgemäß dadurch gelöst, dass Bier mit einem entfetteten Kürbiskernextrakt versetzt ist. Dadurch wird erreicht, dass die bekannte Wirkung des Kürbiskernextraktes auf die Harnwege des Menschen durch die Wirkung der Kürbiskerne auch die harntreibende Wirkung des Biers ergänzt wird, wobei das Bier ein angenehmes, etwas viskoses Mundgefühl erhält, also mehr "haptischen Körper" besitzt. Weiters bekommt es einen nussigen Geschmack.

Bezüglich der Wirkung des Kürbiskernextraktes ist zu bemerken, dass das deutsche Bundesgesundheitsamt in einer Monographie aus dem Jahre 1989 bereits die Einnahme von 10g Kürbiskernen pro Tag bei Prostatavergrösserung des Mannes (bis einschl. Krankeitsstadium II.) und bei Blasenschwäche der Frau empfiehlt. Die Wirksamkeit von Kürbiskemen gegen diese Beschwerden wird von Urologen und Gynäkologen bestätigt.

Um ein ausgewogenes Verhältnis zwischen Geschmack des Bieres und dem Geschmack des Kürbiskernextraktes zu erhalten, entspricht die zugesetzte Menge des entfetteten Kürbiskernextraktes zwischen 0,01 - 1 %, vorzugsweise 0,05 - 0,5 %, insbesondere 0,1 - 0,2 %, der Gesamtmenge. Um eine gute Löslichkeit im Bier zu erzielen, kann der Kürbiskernextrakt ein Ethanol/Wasser/Auszug in pharmazeutischer Reinheit sein. Als besonders günstig in der Verarbeitung hat sich erwiesen, wenn der Kürbiskernextrakt ein Verhältnis von Wirkstoff in der Extraktzubereitung zu Kürbiskemen von etwa 1:5 bis 1:25, insbesondere 1:15, aufweist.

Bei einem bevorzugten Ausführungsbeispiel wird einem Bier nach dem Brauen, Lagern und Filtrieren 0,16%, das entspricht ca. 0,5g /0,33 l Flasche, eines Kürbiskernextraktes mit einer Konzentration 1:15 beigemischt. Das Bier ist ein schwach gehopftes, herkömmliches, helles, untergäriges Bier mit einem Alkoholgehalt von 4,7 Vol.-% bei einer Stammwürze von ca.10,8° Balling, also ein Schankbier. Es können auch spezielle Biermischungen verwendet werden, wobei allerdings darauf zu achten ist, daß die Geschmacksstoffe des Kürbiskernextraktes und die Bitterstoffe des Hopfens in einem geschmacklich verträglichen Verhältnis bleiben.

Das so erhaltene Getränk wird nach etwaigem Pasteurisieren in Flaschen wie Bier abgefüllt.

Bei einem weiteren bevorzugten Ausführungsbeispiel werden bei sonst gleicher Vorgangsweise 0,24% Kürbiskernextrakt zugesetzt, wodurch die Geschmacksnote des Kürbiskernextraktes stärker betont wird.

## Patentansprüche

1. Bierhaltiges Getränk, **dadurch gekennzeichnet, daß** Bier mit einem entfetteten Kürbiskernextrakt versetzt ist.

2. Bierhaltiges Getränk nach Anspruch 1, **dadurch gekennzeichnet, daß** die zugesetzte Menge des entfetteten Kürbiskernextraktes zwischen 0,01-1%, vorzugsweise 0,05 bis 0,5%, insbesondere 0,1 -0,2%, der Gesamtmenge entspricht.

3. Bierhaltiges Getränk nach Anspruch 1 oder 2, **dadurch gekennzeichnet, daß** der Kürbiskernextrakt ein Ethanol/Wasser/Auszug in pharmazeutischer Reinheit ist.

4. Bierhaltiges Getränk nach einem der Ansprüche 1 bis 3, **dadurch gekennzeichnet, daß** der Kürbiskernextrakt ein Verhältnis von Wirkstoff in der Extraktzubereitung zu Kürbiskernen von etwa 1:5 bis 1:25, insbesondere 1:15, aufweist.

5. Bierhaltiges Getränk nach einem der Ansprüche 1 bis 4, daß das Bier ein schwach gehopftes Schankbier ist.

## Claims

1. Beer-containing beverage, **characterized in that** beer is mixed with defatted pumpkinseed extract.

2. Beer-containing beverage according to claim 1, **characterized in that** the added amount of defatted extract of pumpkinseed is between 0,01-1%, preferably 0,05-0,5%, especially 0,1-0,2% of the total amount.

3. Beer-containing beverage according to claim 1 or 2, **characterized in that** the defatted extract of pumpkinseed is an ethanol/water extract of pharmaceutical purity,

4. Beer-containing beverage according to one of the claims 1 to 3, **characterized in that** the defatted extract of pumpkinseed has a ratio of active substance in the extract preparation to pumpkinseed of about 1:5 to 1:25, especially 1:15.

5. Beer-containing beverage according to one of the claims 1 to 4, **characterized in that** the beer is a weakly hopped draft beer.

## Revendications

1. Boisson contenant de la bière, **caractérisée en ce que** de la bière est mélangée avec un extrait de graines de courge dégraissé.

2. Boisson contenant de la bière selon la revendication 1, **caractérisée en ce que** la quantité ajoutée d'extrait de graines de courge dégraissé est comprise entre 0,01 et 1 %, de préférence de 0,05 à 0,5 %, particulièrement de 0,1 à 0,2 % de la quantité totale.

3. Boisson contenant de la bière selon la revendication 1 ou 2, **caractérisée en ce que** l'extrait de graines de courge est un extrait eau/éthanol en pureté pharmaceutique.

4. Boisson contenant de la bière selon l'une quelconque des revendications 1 à 3, **caractérisée en ce que** l'extrait de graines de courge présente une proportion d'agent actif dans la préparation d'extrait d'environ 1 : 5 à 1 : 25, particulièrement de 1 : 15 par rapport aux graines de courge.

5. Boisson contenant de la bière selon l'une quelconque des revendications 1 à 4, **caractérisée en ce que** la bière est une bière à la pression faiblement houblonnée.
